# EUROPÄISCHE PATENTSCHRIFT

(11) **EP 3 612 870 B1**
(45) Veröffentlichungstag und Bekanntmachung des Hinweises auf die Patenterteilung: **11.05.2022**
(21) Anmeldenummer: 18716133.6
(22) Anmeldetag: 20.03.2018
(51) Int. Cl.: G02B 5/08, G02B 27/01, G02B 27/28, G02B 5/30, G02B 5/20, G02B 5/26

(54) **HEAD-UP-DISPLAY**
HEAD-UP DISPLAY
AFFICHAGE TÊTE HAUTE

(30) Priorität: 19.04.2017 DE 102017206544
(43) Veröffentlichungstag der Anmeldung: 26.02.2020
(73) Patentinhaber: Continental Automotive GmbH, 30165 Hannover (DE)
(72) Erfinder: JUNGE, Christian, 60311 Frankfurt am Main (DE)
(74) Vertreter: Continental Corporation
(86) Internationale Anmeldenummer: PCT/EP2018/057039
(87) Internationale Veröffentlichungsnummer: WO 2018/192730

(56) Entgegenhaltungen:
- WO-A1-2016/157815
- US-A- 4 984 872
- US-A1- 2013 077 156

## Beschreibung

Die vorliegende Erfindung betrifft ein Head-Up-Display, bei dem eine Anzeigeeinheit vor Schädigung durch von außen einfallendes Licht geschützt ist, ein entsprechendes Spiegelelement sowie ein Verfahren zu dessen Herstellung.

Ein Head-Up Display erzeugt in der Windschutzscheibe ein für den Fahrer sichtbares virtuelles Bild. Dieses Bild wird in der Regel auf einer Anzeigeeinheit, beispielsweise einer Flüssigkristallanzeige (LCD, Liquid Crystal Display) erzeugt und mittels Spiegeln durch ein Loch im Armaturenbrett an die Windschutzscheibe reflektiert. Oft ist es erforderlich, vor allem die Anzeigeeinheit vor Überhitzung zu schützen.

Die DE 10 2005 020 233 A1 zeigt ein Head-Up-Display mit einer bildgenerierenden Einheit, einer Ablenkeinheit und einer Spiegeleinheit, wobei dieses zusätzlich eine zwischen Ablenkeinheit und Spiegeleinheit angeordnete Polarisationsschicht aufweist. Dies hat den Vorteil, daß von außen einfallendes Streulicht nur einer Polarisationsrichtung bis zur bildgenerierenden Einheit gelangt, während etwa 50% der einfallenden Lichtleistung von der Polarisationsschicht aufgehalten werden. Als nachteilig daran ist anzusehen, daß ein zusätzliches Element, die Polarisationsschicht, anzuordnen ist. Diese bietet zudem nur Schutz bezüglich einer Polarisationsrichtung, während etwa 50 % des einfallenden Störlichts bis zur bildgebenden Einheit vordringen und diese dabei schädigen können.

Die US 9,423,615 zeigt ein Head-Up-Display mit einer bildgenerierenden Einheit, einer Ablenkeinheit und einer Spiegeleinheit. Die Ablenkeinheit weist dabei einen spektral teilweise reflektierenden Spiegel auf, der den Infrarot- (IR-) Anteil des Lichtes nicht reflektiert, sondern passieren läßt. Ein hinter dem Spiegel angeordneter IR-Sensor detektiert die Intensität des durchgelassenen Lichtes. Ist diese zu hoch, so wird die Lichtquelle der bildgenerierenden Einheit in ihrer Leistung reduziert oder komplett abgeschaltet. Als nachteilig daran ist anzusehen, daß das Head-Up-Display dem Fahrer in vielen Situationen nicht zur Verfügung steht, da es wegen Überhitzungsgefahr abgeschaltet ist. Oder es steht nicht in vollem Umfang zur Verfügung, wenn die Leistung der Lichtquelle reduziert ist. Ein weiteres Head-Up-Display ist aus WO2016157815 A1 bekannt.

Es ist wünschenswert, die bildgenerierende Einheit vor Schädigung durch von außen in das Head-Up-Display einfallendes Störlicht, insbesondere Sonnenlicht, zu schützen. Die Schädigung tritt hauptsächlich durch Wärmeentwicklung auf, also durch den langwelligen IR-Anteil des Lichtes sowie durch Absorption und Umwandlung in Wärme von anderen Wellenlängenanteilen. Auch eine durch den kurzwelligen UV-Anteil hervorgerufenen Schädigung soll möglichst vermieden werden.

Erfindungsgemäß ist vorgesehen, daß das Head-Up-Display eine bildgenerierende Einheit, eine Ablenkeinheit und eine Spiegeleinheit aufweist, wobei die Ablenkeinheit ein Spiegelelement aufweist, welches eine auf einem Substrat befindliche spektral teilweise reflektierende Schicht aufweist, auf der sich eine absorbierende Polarisationsschicht befindet, die Licht durchläßt, das die gleiche Polarisationsrichtung wie die Polarisationsschicht aufweist, und Licht anderer Polarisierung absorbiert. Dabei ist die bildgenerierende Einheit beispielsweise eine Flüssigkristallanzeige, eine Anzeige auf LED-oder OLED-Basis, auf Basis von Mikrospiegeln beruhend, oder auf anderen geeigneten Bildgenerierungstechniken beruhend. Insbesondere bei Flüssigkristallanzeigen führt übergroße Erwärmung zur Zerstörung. Zumindest beeinträchtigt sie deren Betrieb. Auch die Anzeigen gemäß anderer Technologien werden von zu großer Lichteinstrahlung negativ beeinträchtigt. Die Ablenkeinheit leitet das Licht von der bildgenerierenden Einheit zu einer Spiegeleinheit, an der das Bild der bildgenerierenden Einheit mit einem Bild der Umgebung überlagert wird und die überlagerten Bilder ins Auge eines Fahrers des Fahrzeugs, in dem sich das Head-Up-Display befindet, geworfen werden.

Erfindungsgemäß wird die Funktion der spektral teilweise reflektierenden Schicht und die Funktion der polarisierenden Schicht in einem einzigen Bauteil kombiniert, welches zusätzlich die Funktion eines Spiegels der Ablenkeinheit des Head-Up-Displays übernimmt. Durch diese zweifache Maßnahme wird ein erhöhter Schutz vor Wärmeentwicklung erreicht, ohne daß ein höherer Aufwand bei der Montage erforderlich wäre, da kein zusätzliches Teil vorhanden ist. Ein weiterer Vorteil besteht darin, daß mehrere Funktionen ermöglicht werden, ohne die Anzahl der optischen Grenzflächen zu erhöhen. Jede optische Grenzfläche geht mit Reflexionen, Lichtbrechung etc. einher, was einzeln betrachtet nur eine geringfügige Beeinträchtigung des vom Fahrer wahrgenommenen virtuellen Bildes hervorruft, in der Summe die Qualität der Abbildung aber beeinträchtigt, und somit Gegenmaßnahmen erforderlich macht, was die Komplexität und die Herstellungskosten des Head-Up-Displays erhöht. Bereits bei einer einzigen optischen Grenzfläche können unerwünschte Reflexe auftreten, die vom Betrachter als störend empfunden werden. Jede weitere optische Grenzfläche kann weitere unerwünschte Reflexe hervorrufen. Da bei dem erfindungsgemäßen Spiegelelement eine polarisierende Schicht parallel zur reflektierenden Schicht auf dieser angeordnet ist, treten hier keine zusätzlichen störenden Reflexe auf. Das erfindungsgemäße Spiegelelement ist ein absorbierender Polarisator. Man unterscheidet zwei Arten von Polarisatoren, je nachdem, wie die Polarisationstrennung erfolgt. Es gibt reflektierende Polarisatoren, die einfallendes unpolarisiertes Licht in eine reflektierte Polarisationskomponente und eine transmittierte Komponente zerlegen. Die transmittierte Komponente kann dabei auch Anteile der reflektierten Polarisationsrichtung enthalten. ein Beispiel für reflektierende Polarisatoren sind die bekannten Drahtgitterpolarisatoren. Es gibt weiterhin absorbierende Polarisatoren, die von unpolarisiertem Licht eine Polarisationskomponente absorbieren und die andere transmittieren, beispielsweise mit Hilfe von passend ausgerichteten Molekülen. Für die Art des Polarisators ist also die Art der Polarisationstrennung entscheidend. Das erfindungsgemäße Aufbringen einer weiteren absorbierenden Schicht, der Polarisationsschicht, auf einen Spiegel hat den weiteren Vorteil, daß die absorbierende Schicht in dieser Anordnung zweifach vom Licht durchquert wird, was ihre effektive Dicke verdoppelt. Es reicht also bereits eine vergleichsweise dünne absorbierende Polarisationsschicht aus, um eine hinreichende Reduzierung der unerwünschten Polarisationskomponente zu erzielen.

Erfindungsgemäß ist vorgesehen, daß die spektral teilweise reflektierende Schicht eine Bandpaßcharakteristik aufweist. Vorzugsweise werden die sichtbaren Anteile des Lichtes, also Wellenlängen zwischen etwa 400 nm und etwa 800 nm reflektiert, während die Infrarotanteile mit Wellenlänge größer etwa 800 nm durchgelassen werden, sowie der UV-Anteil mit Wellenlängen unter etwa 400 nm. Somit gelang nur der sichtbare Anteil zur bildgenerierenden Einheit. Der besonders wärmeerzeugende langwellige Infrarotanteil durchläuft die spektral teilweise reflektierende Schicht und erzeugt an anderer Stelle Wärme, an der diese die bildgenerierende Einheit nicht schädigen kann. Entsprechendes gilt für den kurzweiligen Ultraviolettanteil.

Vorteilhafterweise reflektiert die spektral teilweise reflektierende Schicht im wesentlichen nur in denjenigen Wellenbereichen, die von der bildgenerierenden Einheit erzeugt werden. Dies hat den Vorteil, daß bei wellenlängenselektiver Lichterzeugung der bildgenerierenden Einheit, beispielsweise wenn diese auf Laserlichtquellen oder anderen schmalbandigen Lichtquellen beruht, auf diese Weise ein noch geringerer Anteil des Störlichts bis zur bildgenerierenden Einheit gelangt, während die anderen Wellenlängenbereiche die spektral teilweise reflektierende Schicht durchlaufen und nicht zur bildgenerierenden Einheit gelangen. Von der bildgenerierenden Einheit erzeugte Lichtstrahlen dagegen werden, wie gewünscht, von der spektral selektiv reflektierenden Schicht reflektiert, um das vom Fahrer wahrzunehmende Virtuelle Bild zu erzeugen.

Erfindungsgemäß ist vorgesehen, daß das Substrat eine ebene Oberfläche aufweist, auf die die spektral teilweise reflektierende Schicht aufgedampft ist. Die Polarisationsschicht ist dabei eine Folie, die auf die spektral teilweise reflektierende Schicht auflaminiert ist. Dies hat den Vorteil, daß es sich hier um ein einziges Bauteil handelt, welches zudem günstig herstellbar ist. Ein Substrat mit flache Oberfläche ist leichter herstellbar als eines mit gekrümmter Oberfläche. Hier kann zum Beispiel Flachglas aus Großserienproduktion verwendet werden. Das Aufdampfen auf ebene Flächen ist ein bewährter Prozeß, der zuverlässig und nahezu ohne Ausschuß abläuft. Auf die ebene, bedampfte Fläche läßt sich die als Folie ausgebildete Polarisationsschicht besonders einfach und zuverlässig laminieren. Wird eine gekrümmte Oberfläche des Spiegelelements gewünscht, beispielsweise um die Oberflächenkrümmung einer als Spiegeleinheit fungierenden Windschutzscheibe zu kompensieren, läßt sich auch hierauf eine entsprechende Folie aufbringen. Dies erfordert zwar einen höheren Aufwand als bei einer ebenen Fläche, dieser kann sich aber dadurch rechnen, daß ein weiteres Element, daß ansonsten zur Krümmungskompensation erforderlich ist, eingespart wird.

Gemäß einer Weiterbildung der Erfindung ist das Substrat lichtundurchlässig ausgebildet. Hierzu wird beispielsweise dunkler Kunststoff, Metall, ein Keramikelement oder gefärbtes Glas verwendet. Ist das Substrat lichtundurchlässig, so hat dies den Vorteil, daß der Infrarotanteil, der die spektral teilweise reflektierende Schicht passiert, vom Substrat absorbiert wird, wobei sich dieses erwärmt. Auch die absorbierende Polarisationsschicht erwärmt sich durch das Absorbieren von Licht der nicht durchgelassenen Polarisationsrichtung. Das Spiegelelement erwärmt sich somit relativ gleichmäßig, was durch Wärmeausdehnung bedingte Spannungen zwischen Substrat und den auf diesem angeordneten Schichten reduziert, und somit die Lebensdauer des Spiegelelements erhöht. Alternativ dazu ist das Substrat lichtdurchlässig oder teilweise lichtdurchlässig ausgebildet. Dies führt aber dazu, daß durchgelassenes Licht auf andere Bauteile fällt, und diese in eventuell unerwünschter Weise erwärmt oder von diesen in unerwünschter Weise reflektiert wird.

Vorzugsweise weist das Substrat eine große Masse auf. Dazu ist beispielsweise ein massiver Metallblock vorgesehen, beispielsweise aus Aluminium, was eine hohe Wärmeleitfähigkeit aufweist. Der massive Metallblock kann auch aus Kupfer bestehen, welches neben einer hohen Wärmeleitfähigkeit zusätzlich eine höhere spezifische Wärmekapazität als Aluminium aufweist. Auch ein geeignetes Kunststoffmaterial läßt sich hier vorteilhaft einsetzen. Ebenso kommt ein Glassubstrat entsprechend großer Masse in Betracht. Ein eine große Masse aufweisendes Substrat hat den Vorteil, daß es eine größere Wärmemenge aufnehmen kann, ohne selbst zu überhitzen oder Befestigungselemente, an denen es im Head-Up-Display befestigt ist, einer zu großen Wärmebelastung auszusetzen. Außerdem gewährleistet die große Masse eine Trägheit auch beim Ändern der Temperatur, sodaß es auch bei kurzfristig auftretenden starken Änderungen im Lichteinfall nur zu langsamen Temperaturänderungen des Spiegelelements kommt. Möglicherweise auftretende, durch Wärmeausdehnung bedingte Spannungen bleiben dabei gering. Dies erhöht die Lebensdauer des Spiegelelements, und stellt sicher, daß die optischen Eigenschaften des Spiegelelements konstant bleiben. Die vom Fahrer wahrnehmbare optische Qualität des Head-Up-Displays leidet also nicht unter einer schnell variierenden, von außen einfallenden Lichtmenge.

Ein erfindungsgemäßes Verfahren zum Herstellen eines Head-Up-Displays weist die folgenden Schritte auf. Zunächst wird ein Substrat mit einer ebenen Oberfläche bereitgestellt. Dann wird eine spektral teilweise reflektierende Schicht auf die Oberfläche des Substrats aufgedampft. Anschließend wird eine absorbierende Polarisationsschicht als Folie auf die spektral teilweise reflektierende Schicht laminiert. Das so gewonnene Spiegelelement wird in eine Ablenkeinheit des Head-Up-Displays eingesetzt. Das Einsetzen kann dabei gestuft erfolgen, nämlich zunächst in eine Ablenkeinheit, die dann anschließend als Modul ins Head-Up-Display integriert wird. Das Spiegelelement kann auch direkt in ein bis auf das Spiegelelement vormontiertes Head-Up-Display oder in eine Zwischenstufe davon eingesetzt werden. Das erfindungsgemäße Verfahren hat die zu den Geräteansprüchen beschriebenen Vorteile.

Weitere Ausgestaltungen der Erfindung und deren Vorteile sind auch in der nachfolgenden Beschreibung anhand von Ausführungsbeispielen angegeben. Dabei zeigen:
- Fig.1: Head-Up-Display
- Fig.2: Spiegelelement
- Fig.3: Reflektivität der spektral teilweise reflektierenden Schicht
- Fig.4: Flußdiagramm eines Herstellungsverfahrens

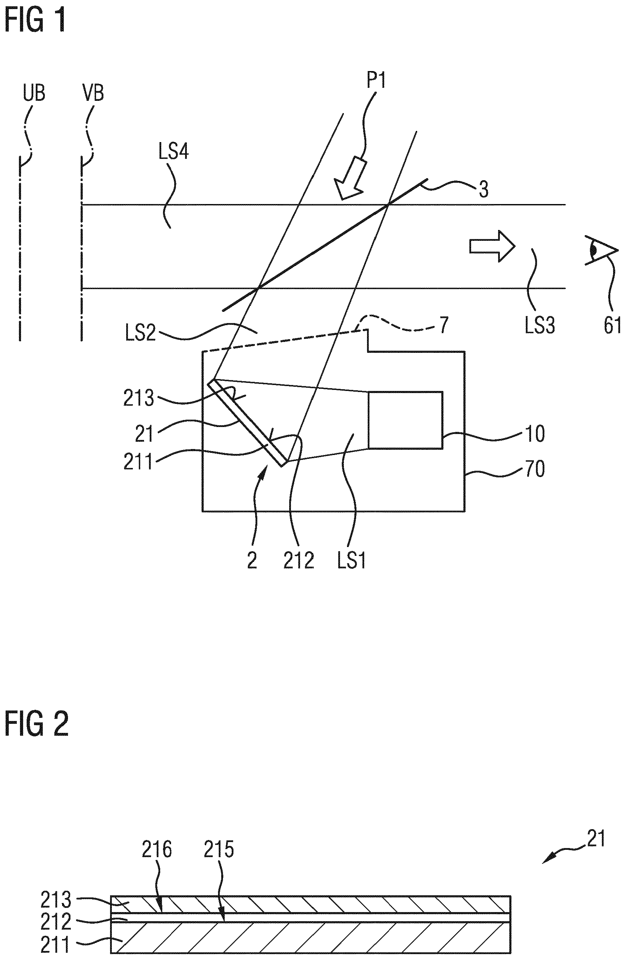

Fig.1 zeigt ein erfindungsgemäßes Head-Up-Display mit einer bildgenerierenden Einheit 10, eine Ablenkeinheit 2 und eine Spiegeleinheit 3. Die Ablenkeinheit 2 weist ein Spiegelelement 21 auf. Auf einem Substrat 211 des Spiegelelements 21 sind eine spektral teilweise reflektierende Schicht 212 und eine Polarisationsschicht 213 angeordnet. Die beiden Schichten 212 und 213 sind so dünn, daß sie in dieser Darstellung nicht unterscheidbar sind. Man erkennt weiterhin eine Ausgangsöffnung 7 im Gehäuse 70 des Head-Up-Displays. Die Ausgangsöffnung 7 ist gestrichelt dargestellt, in manchen Head-Up-Displays gemäß Stand der Technik ist dort eine Polarisationsschicht angeordnet.

Die bildgenerierende Einheit 10 generiert ein Bild, von dem Lichtstrahlen LS1 ausgehen, die vom Spiegelelement 21 reflektiert werden. Die reflektierten Lichtstrahlen LS2 gelangen auf die Spiegeleinheit 3, beispielsweise die Windschutzscheibe eines Fahrzeugs oder einen zwischen Windschutzscheibe und Fahrer angeordneten sogenannten Combiner. Von dort werden sie als Lichtstrahlen LS3 in Richtung Auge 61 des Fahrers reflektiert. Das von der bildgenerierenden Einheit 10 generierte Bild erscheint dem Fahrer als virtuelles Bild VB vor dem Fahrzeug zu schweben. Es erscheint dem Fahrer als mit dem Umgebungsbild UB der Umgebung überlagert. Die Lichtstrahlen LS4 existieren somit nicht in der Realität, sondern werden vom Fahrer als vom virtuellen Bild VB her kommend interpretiert.

Von oben kommend erkennt man mittels Pfeil P1 angedeutet Sonnenlicht, welches in Verlängerung der Lichtstrahlen LS2 in zu diesen entgegengesetzter Richtung auf die Spiegeleinheit 3 fällt. Die Spiegeleinheit 3 ist teilweise durchlässig, beispielsweise um das Umgebungsbild UB durchzulassen und dem Fahrer des Fahrzeugs einen Blick auf das Verkehrsgeschehen zu ermöglichen. Das unerwünschte Sonnenlicht, welches unter bestimmten Bedingungen in dem hier dargestellten Winkel auf die Spiegeleinheit 3 fällt, durchläuft diese, wird vom Spiegelelement 21 in Richtung bildgenerierender Einheit 10 reflektiert und kann dort zu Beeinträchtigungen führen, wie beispielsweise einer überhitzten Flüssigkristallanzeige, die dadurch schnell altert und im Extremfall sogar zerstört wird.

Fig.2 zeigt das Spiegelelement 21 in vergrößerter, geschnittener Darstellung. Dabei sind die dargestellten Dickenverhältnisse nicht maßstäblich. Man erkennt das Substrat 211, die darüberliegende spektral teilweise reflektierende Schicht 212 und die über dieser befindliche Polarisationsschicht 213. Das Substrat 211 hat eine ebene Oberfläche 215, auf die die spektral teilweise reflektierende Schicht 212 aufgedampfte ist. Die Schicht 212 weist eine relativ gleichmäßige Dicke auf, sodaß auch ihre Oberfläche 216 eben ist. Die als Folie vorliegende Polarisationsschicht 213 ist auf die Oberfläche 216 der spektral teilweise reflektierenden Schicht 212 auflaminiert.

Trifft Licht auf die Polarisationsschicht 213, so wird nur der Teil des Lichts durchgelassen, der die gleiche Polarisationsrichtung wie die Polarisationsschicht 213 aufweist. Anteile mit anderer Polarisierung werden von der Polarisationsschicht nicht durchgelassenen und von dieser absorbiert. Auf diese Weise wird ein großer Teil des in Richtung des Pfeils P1 einfallenden Sonnenlichts absorbiert. Nach Durchlaufen der Polarisationsschicht 213 wird das einfallende Licht an der spektral teilweise reflektierenden Schicht 212 zum Teil reflektiert, und zum anderen Teil durchgelassen. Durchgelassen werden die Infrarotanteile und die UV-Anteile des einfallenden Lichts. Lediglich das sichtbare Licht wird reflektiert und durchläuft anschließend die Polarisationsschicht 213. Es gelangt in die bildgenerierende Einheit 10. Da die Infrarot- und UV-Anteile die teilweise reflektierende Schicht passieren, gelangen diese nicht in die bildgenerierende Einheit 10.

Die von der bildgenerierenden Einheit 10 abgestrahlten Lichtstrahlen LS1 sind polarisiert, sodaß sie nahezu komplett von der Polarisationsschicht 213 reflektiert werden. Da die spektral teilweise reflektierende Schicht 212 auf die Wellenlänge des von der bildgenerierenden Einheit 10 abgegebenen Lichts abgestimmt ist, passiert dieses jene auch nahezu ungeschwächt. Auch die Spiegeleinheit 3 reflektiert Licht einer bestimmten Polarisationsrichtung optimal. Die Polarisation des von der bildgenerierenden Einheit 10 abgegebenen Lichts ist entsprechend ausgerichtet. Dies bedeutet, daß die von der bildgenerierenden Einheit 10 abgestrahlten Lichtstrahlen LS1-LS3 in ihrer Intensität nahezu ungemindert auf das Auge 61 des Betrachters treffen, während das Störlicht, welches entsprechend Pfeil P1 von außen einfällt, von dem Spiegelelement 21 stark abgeschwächt wird und somit keinen oder nur geringfügigen Schaden in der generierenden Einheit 10 hervorruft.

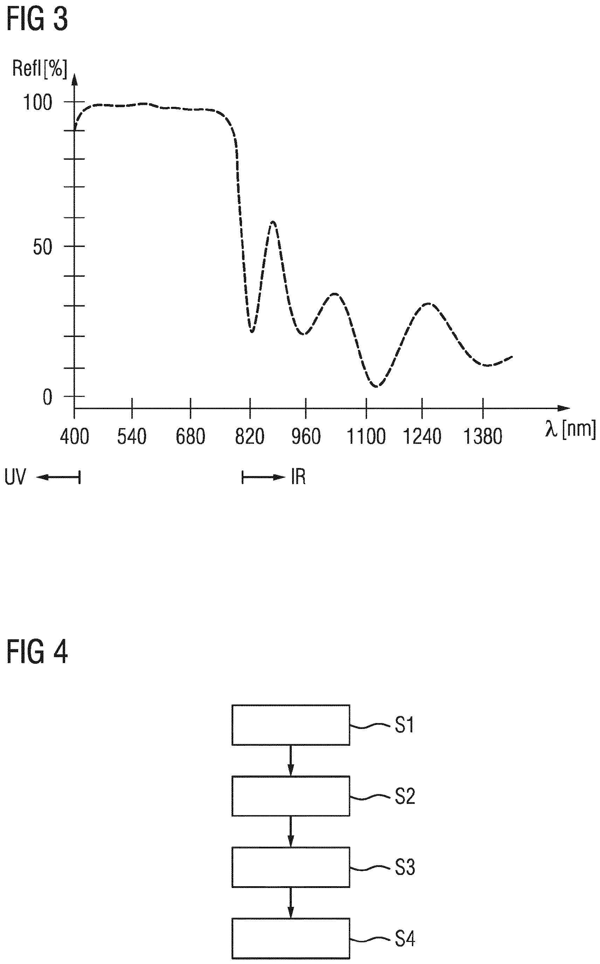

Fig.3 zeigt die Reflektivität in Prozent aufgetragen über der Wellenlänge in Nanometer der spektral teilweise reflektierenden Schicht 212. Man erkennt, daß die Reflektivität oberhalb von 400 nm nahezu 100% beträgt und bis etwa 800 nm nur schwach abfällt. Bei etwa 820 nm erreicht die Reflektivität ein Tief von etwa 20%, steigt dann noch einmal auf etwa 50% und bleibt oberhalb von etwa 900 nm im wesentlichen unter einer Reflektivität von 30%. Infrarotlicht wird somit durch die spektral teilweise reflektierende Schicht 212 stark reduziert, während das sichtbare Licht nahezu komplett reflektiert wird. Dies ist optimal für eine im gesamten sichtbaren Spektrum abstrahlende bildgenerierende Einheit 10. Weist diese dagegen Lichtquellen mit jeweils fester Wellenlänge mit geringer Variation, so bietet es sich an, eine teilweise reflektierende Schicht zu verwenden, die nur in diesen Wellenlängenbereichen reflektiert, und das Licht anderer Wellenlängen passieren läßt. Eine entsprechende Reflektivität über Wellenlänge ist hier nicht dargestellt, der Fachmann malt sich aber leicht aus, wie eine derartige Charakteristik aussieht. Die dargestellte spektral teilweise reflektierende Schicht 212 weist somit eine Bandpaßcharakteristik auf. Dies ist auch in solchen Fällen vorteilhaft, in denen unterschiedliche Lichtquellen in gleichen oder unterschiedlichen Varianten von bildgenerierenden Einheiten 10 Verwendung finden. Unabhängig von der tatsächlich verwendeten Wellenlänge ist die Bandpaßcharakteristik immer passend. Eine stärkere Wellenlängenselektivität reduziert dagegen nochmals das in die bildgenerierende Einheit 10 einfallende Störlicht.

In Fig.2 ist das Substrat 211 lichtundurchlässig. Von der spektral teilweise reflektierenden Schicht durchgelassenes Licht wird somit von dem Substrat 211 absorbiert. Gemäß einer vorteilhaften Variante der Erfindung weist das Substrat 211 eine große Masse auf. Seine Dicke ist in diesem Fall wesentlich größer als in der Abbildung dargestellt.

Fig.4 zeigt ein Flußdiagramm eines Herstellungsverfahrens eines erfindungsgemäßen Head-Up-Displays. Im Schritt S1 wird das Substrat 211 bereitgestellt, welches eine ebene Oberfläche 215 aufweist. Im Schritt S2 wird eine spektral teilweise reflektierende Schicht 212 auf die Oberfläche 215 aufgedampft. Anschließend wird im Schritt S3 eine absorbierende Polarisationsschicht 213 auf die spektral teilweise reflektierende Schicht 212 laminiert. Das so gewonnene Spiegelelement 21 wird im Schritt S4 in eine Ablenkeinheit 2 des Head-Up-Displays eingesetzt.

Die Erfindung kombiniert in anderen Worten eine spektrale Filterung und eine Polarisationsfilterung in einem Bauteil, dem Spiegelelement 21, ohne zusätzliche Komponenten im Head-Up-Display hinzuzufügen. Das Spiegelelement 21 ersetzt einen ohnehin im Head-Up-Display an dieser Stelle benötigten Spiegel und besteht aus einem Substrat 211, das transparent, lichtundurchlässig, oder teilweise lichtdurchlässig sein kann, auf dem eine für das von der Lichtquelle der bildgenerierenden Einheit 10 ausgesendete Licht reflektierende Schicht 212 aufgebracht ist, die spektrale Anteile außerhalb dieses Bereichs transmittiert oder absorbiert. Auf dieser Schicht 212 ist ein absorbierender Polarisator, die Polarisationsschicht 213, aufgebracht, der nur die Polarisation der Lichtquelle der bildgenerierenden Einheit 10 transmittiert und Licht anderer Polarisation absorbiert.

Ein Vorteil der Erfindung besteht darin, daß die vorgeschlagene Kombination die gesamte Schutzfunktion in einem Bauteil ermöglicht, ohne dem Head-Up-Display zusätzliche Komponenten hinzuzufügen. Dadurch ist eine kompakte Umsetzung ermöglicht und die Zahl der optischen Grenzflächen wird reduziert wodurch eine höhere Effizienz erreicht wird und Rückreflexe vermieden werden. Durch die Aufbringung des absorbierenden Polarisators, der Polarisationsschicht 213, auf einem massiven Substrat 211 läßt sich die aufgenommene Wärme durch die Sonne leichter abführen. Die Erfindung eignet sich auch für andere optische Systeme mit Spiegel, die eine Polarisationsfilterung benötigen.

Es liegt im Können des Fachmanns, eine oder mehrere der genannten Maßnahmen abzuändern oder in anderer Kombination einzusetzen, ohne über den Gedanken der Erfindung hinauszugehen, auch wenn diese nicht explizit hier beschrieben sind.

## Patentansprüche

1. Head-Up-Display aufweisend eine bildgenerierende Einheit (10), eine Ablenkeinheit (2) und eine Spiegeleinheit (3), wobei die Ablenkeinheit (2) ein Spiegelelement (21) aufweist, welches eine auf einem Substrat (211) befindliche spektral teilweise reflektierende Schicht (212) aufweist, auf der sich eine absorbierende Polarisationsschicht (213) befindet, die Licht durchläßt, das die gleiche Polarisationsrichtung wie die Polarisationsschicht (213) aufweist, und Licht anderer Polarisierung absorbiert, wobei von der bildgenerierenden Einheit ausgehendes Licht von der Ablenkeinheit hin zu der Spiegeleinheit reflektiert wird und die absorbierende Polarisationsschicht sich auf der der bildgenerierenden Einheit zugewandten Seite der spektral teilweise reflektierenden Schicht befindet.

2. Head-Up-Display nach Anspruch 1, **dadurch gekennzeichnet, daß** die spektral teilweise reflektierende Schicht (212) eine Bandpaßcharakteristik aufweist.

3. Head-Up-Display nach Anspruch 1, **dadurch gekennzeichnet, daß** die spektral teilweise reflektierende Schicht (212) im wesentlichen nur in denjenigen Wellenlängenbereichen reflektiert, die von der bildgenerierenden Einheit (10) erzeugt werden.

4. Head-Up-Display nach einem der vorhergehenden Ansprüche, **dadurch gekennzeichnet, daß** das Substrat (211) eine ebene Oberfläche (215) aufweist, die spektral teilweise reflektierende Schicht (212) eine auf das Substrat (211) aufgedampfte Schicht (212) ist, und die Polarisationsschicht (213) eine auflaminierte Folie ist.

5. Head-Up-Display nach einem der vorhergehenden Ansprüche, **dadurch gekennzeichnet, daß** das Substrat (211) lichtundurchlässig ist.

6. Head-Up-Display nach einem der vorhergehenden Ansprüche, **dadurch gekennzeichnet, daß** das Substrat (211) eine große Masse aufweist.

7. Verfahren zum Herstellen eines Head-Up-Displays nach Anspruch 1, aufweisend die Schritte
- Bereitstellen (S1) eines Substrats (211) mit ebener Oberfläche (215)
- Aufdampfen (S2) eine spektral teilweise reflektierende Schicht (212) auf die Oberfläche des Substrats (211)
- Laminieren (S3) einer absorbierenden Polarisationsschicht (213) auf die spektral teilweise reflektierende Schicht (212),
- Einsetzen (S4) des so gewonnenen Spiegelelements (21) in eine Ablenkeinheit (2) des Head-Up-Displays.

## Claims

1. Head-up display comprising an image-generating unit (10), a deflection unit (2) and a mirror unit (3), wherein the deflection unit (2) comprises a mirror element (21) that comprises a spectrally partially reflecting layer (212), disposed on a substrate (211), on which an absorptive polarization layer (213) is disposed that transmits light having the same polarization orientation as the polarization layer (213) and absorbs light of a different polarization, wherein light coming from the image-generating unit is reflected by the deflection unit to the mirror unit and the absorptive polarization layer is located on the side of the spectrally partially reflecting layer that faces the image-generating unit.

2. Head-up display according to Claim 1, **characterized in that** the spectrally partially reflecting layer (212) has a band-pass characteristic.

3. Head-up display according to Claim 1, **characterized in that** the spectrally partially reflecting layer (212) reflects substantially only in those wavelength ranges that are generated by the image-generating unit (10).

4. Head-up display according to one of the preceding claims, **characterized in that** the substrate (211) has a plane surface (215), the spectrally partially reflecting layer (212) is a layer (212) vapour-deposited onto the substrate (211), and the polarization layer (213) is a laminated-on film.

5. Head-up display according to one of the preceding claims, **characterized in that** the substrate (211) is opaque.

6. Head-up display according to one of the preceding claims, **characterized in that** the substrate (211) has a large mass.

7. Method for the production of a head-up display according to Claim 1, comprising the steps of
- providing (S1) a substrate (211) with a plane surface (215)
- vapour-depositing (S2) a spectrally partially reflecting layer (212) onto the surface of the substrate (211)
- laminating (S3) an absorptive polarization layer (213) onto the spectrally partially reflecting layer (212),
- incorporating (S4) the mirror element (21) obtained in this way into a deflection unit (2) of the head-up display.

## Revendications

1. Dispositif d'affichage tête haute comportant une unité de génération d'image (10), une unité de déviation (2) et une unité formant miroir (3), l'unité de déviation (2) comportant un élément formant miroir (21) qui comporte une couche (212) qui est spectralement partiellement réfléchissante, qui est située sur un substrat (211) et sur laquelle se trouve une couche de polarisation absorbante (213) qui transmet une lumière qui a la même direction de polarisation que la couche de polarisation (213) et qui absorbe une lumière d'une polarisation différente,
la lumière émanant de l'unité de génération d'image étant réfléchie par l'unité de déflexion en direction de l'unité formant miroir et la couche de polarisation absorbante étant située du côté de la couche spectralement partiellement réfléchissante qui est dirigée vers l'unité de génération d'image.

2. Dispositif d'affichage tête haute selon la revendication 1, **caractérisé en ce que** la couche (212) spectralement partiellement réfléchissante présente une caractéristique passe-bande.

3. Dispositif d'affichage tête haute selon la revendication 1, **caractérisé en ce que** la couche (212) spectralement partiellement réfléchissante réfléchit sensiblement uniquement dans les gammes de longueurs d'onde qui sont générées par l'unité de génération d'image (10).

4. Dispositif d'affichage tête haute selon l'une des revendications précédentes, **caractérisé en ce que** le substrat (211) comporte une surface plane (215), la couche (212) spectralement partiellement réfléchissante est une couche (212) vaporisée sur le substrat (211) et la couche de polarisation (213) est un film stratifié.

5. Dispositif d'affichage tête haute selon l'une des revendications précédentes, **caractérisé en ce que** le substrat (211) est opaque.

6. Dispositif d'affichage tête haute selon l'une des revendications précédentes, **caractérisé en ce que** le substrat (211) a une masse importante.

7. Procédé de fabrication d'un dispositif d'affichage tête haute selon la revendication 1, ledit procédé comportant les étapes suivantes
- fournir (S1) un substrat (211) ayant une surface plane (215)
- vaporiser (S2) une couche (212) spectralement partiellement réfléchissante sur la surface du substrat (211)
- stratifier (S3) une couche de polarisation absorbante (213) sur la couche (212) spectralement partiellement réfléchissante,
- insérer (S4) l'élément formant miroir (21) ainsi obtenu dans une unité de déviation (2) du dispositif d'affichage tête haute.
